(19) Europäisches Patentamt
European Patent Office
Office européen des brevets

(11) **EP 2 826 686 B1**

(12) **EUROPÄISCHE PATENTSCHRIFT**

(45) Veröffentlichungstag und Bekanntmachung des Hinweises auf die Patenterteilung:
**02.11.2022 Patentblatt 2022/44**

(21) Anmeldenummer: **14000848.3**

(22) Anmeldetag: **11.03.2014**

(51) Internationale Patentklassifikation (IPC):
**B60W 30/16** $^{(2020.01)}$

(52) Gemeinsame Patentklassifikation (CPC):
**B60W 50/0097; B60W 30/16; G08G 1/052;**
B60K 2370/5915; B60W 30/18072; B60W 2552/20;
B60W 2556/65; Y02T 10/60

(54) **Verfahren zur Regelung des Abstands eines Fahrzeugs zu einem vorausfahrenden Fahrzeug**

Method for controlling the distance between a vehicle and a preceding vehicle

Procédé de régulation de la distance entre un véhicule et un véhicule précédent

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **11.07.2013 DE 102013011549**

(43) Veröffentlichungstag der Anmeldung:
**21.01.2015 Patentblatt 2015/04**

(73) Patentinhaber: **MAN Truck & Bus SE**
**80995 München (DE)**

(72) Erfinder:
• **Huber, Martin**
**81243 München (DE)**
• **Dörner, Karlheinz**
**85757 Karlsfeld (DE)**

• **Heyes, Daniel**
**81247 München (DE)**
• **Jerg, Stefan**
**80805 München (DE)**
• **Drimml, Peter**
**85221 Dachau (DE)**
• **Zimmermann, Andreas**
**80995 München (DE)**

(74) Vertreter: **Liebl, Thomas et al**
**Neubauer - Liebl - Bierschneider - Massinger**
**Münchener Straße 49**
**85051 Ingolstadt (DE)**

(56) Entgegenhaltungen:
**DE-A1-102008 019 174    DE-A1-102011 121 853**

EP 2 826 686 B1

## Beschreibung

Bei Fahrzeugen, insbesondere bei Nutzfahrzeugen kann der Schwung des Fahrzeugs vorteilhaft verwendet werden, um den Kraftstoffverbrauch zu reduzieren. Hierzu wird in geeigneten Situationen eine Geschwindigkeitserhöhung oder eine Geschwindigkeitsreduzierung vorgenommen. Der allgemein gültige Hintergrund dieser Maßnahme ist, eine Bremsung zu vermeiden und im Gegenzug die Länge und Intensität einer Antriebsphase zu verkleinern. Der Schwung des Fahrzeugs wird dabei in einem Streckenabschnitt genutzt, der am Ende oder Anfang einer Antriebsphase liegt.

Eine solche Schwung-Nutzung kann individuell durch eine entsprechende Fahrweise eines Fahrers erfolgen. Eine verbesserte Schwung-Nutzung wird jedoch durch Automation mittels eines Fahrerassistenzsystems in Verbindung mit einer Geschwindigkeitsregelanlage erreicht, wie dies beispielsweise aus DE 10 2008 023 135 A1 bekannt ist. Dabei werden relevante Situationen für eine Schwungnutzungsphase im Voraus mit Straßen-Streckeninformationen, welche über erweiterte Navigationssysteme im Fahrzeug zur Verfügung stehen, ermittelt. Solche Situationen können sich aus der Topographie, zum Beispiel zunehmendes Gefälle, Gefälleende, enge Kurve, etc. oder aus der Kenntnis der Straßen-Infrastruktur, zum Beispiel Beginn einer Ortschaft, Beginn einer Geschwindigkeitsbegrenzung, etc. ergeben. Weiterhin können Situationen aus der Zielsetzung abgeleitet werden, das Fahrzeug in Bezug auf die Topographie und die Straßen-Infrastruktur in einem optimalen, verbrauchs- und verschleißgünstigen Betriebspunkt zu betreiben. Hierzu sind entsprechende Optimierungsmaßnahmen bekannt, zum Beispiel aus der DE 10 2008 035 944 B4.

Wird der Geschwindigkeitsverlauf von Fahrzeugen, die eine Einsparsituation nutzen, mit Fahrzeugen verglichen, die mit konstanter Geschwindigkeit fahren, zeigt sich je nach Einsparsituation eine Differenz der Geschwindigkeitsverläufe und damit auch eine Veränderung des Abstands der Fahrzeuge zueinander. Daher ist es für eine vollständige Ausnutzung einer Einsparsituation durch ein Fahrzeug erforderlich, dass ein ausreichender Abstand zu einem Vorausfahrzeug vorhanden ist. Dazu ist bereits ein Verfahren für die spezielle Situation eines Schwungaufbaus vor einer Steigung aus DE 10 2006 003 625 A1 bekannt, mit dem dafür gesorgt wird, dass vorausschauend ein so hoher Abstand zur Verfügung steht, dass eine zur Schwungnutzung erforderliche erhöhte Geschwindigkeit nicht zu einem zu kleinen Abstand zum Vorausfahrzeug führt. Dabei wird in einer Abstandsregelung eine Verstellung des Soll-Abstands zum Vorausfahrzeug auf Basis von Topographieinformationen vor Steigungen vorgenommen. Konkrete Angaben, insbesondere wie groß und wie lange im Voraus dazu ein Zusatzabstand aufgebaut werden soll, sind hier nicht angegeben. Gerade die Art und Weise des Aufbaus des Zusatzabstands und dessen Länge sind aber wesentlich für eine Akzeptanz einer automatisierten Fahrweise mit Schwungnutzungsphase insbesondere im Zusammenhang mit dem nachfolgenden Verkehr und den Auswirkungen auf ein Verhalten im Kolonnenverkehr. DE 102011121853 und DE102008019174 sind als relevanter Stand der Technik anzusehen.

Aufgabe der Erfindung ist es daher, ein Verfahren für eine quantitative Festlegung eines Abstandsaufbaus für eine Schwungnutzungsphase vorzuschlagen und für den nachfolgenden Verkehr ein akzeptables, verkehrsberuhigendes und somit kolonnenstabilisierendes Verhalten sicherzustellen.

Diese Aufgabe wird mit den Merkmalen der unabhängigen Ansprüche gelöst. Vorteilhafte Weiterbildungen sind Gegenstand der Unteransprüche.

Gemäß Anspruch 1 basiert das erfindungsgemäße Verfahren zur Regelung des Abstands eines Fahrzeugs zu einem vorausfahrenden Fahrzeug als Vorausfahrzeug auf vorhandenen Informationen zur eigenen Fahrzeuggeschwindigkeit, zum Abstand und zur Geschwindigkeit des Vorausfahrzeugs und auf Daten von Straßen-Streckeninformationen, insbesondere Steigungsdaten des vorausliegenden Streckenverlaufs.

Im ersten Verfahrensschritt (a) werden über Regeln Situationen identifiziert, die relevant sind für ein Einsparen von Kraftstoff unter Ausnutzung der Geschwindigkeitsvariation und somit kritisch sind im Bezug auf einen zu kleinen Abstand zum vorausfahrenden Fahrzeug. Solche wesentlichen, verbrauchskritischen Situationen als Kraftstoff-Einsparsituationen sind im Einzelnen:

- Gefällebeginn

Das Gefälle nimmt zu, so dass das eigene Fahrzeug allein durch Rollen im Motorschleppbetrieb oder im ausgekuppelten Zustand Geschwindigkeit aufnehmen kann. In dieser Situation wird ein kraftstoffsparender Geschwindigkeitsalgorithmus das Fahrzeug frühzeitig verlangsamen und im stärkeren Gefälle allein durch die Hangabtriebskraft wieder schneller werden lassen.

- Gefälleende

Das Gefälle nimmt ab, so dass das Fahrzeug, das gebremst bergab fährt, den verfügbaren Schwung, gegebenenfalls auch den durch eine temporäre Geschwindigkeitserhöhung erweiterten Schwung möglichst vollständig in die nachfolgende Antriebsphase mitnehmen kann.

- Ausrollen

Aufgrund bekannter Besonderheiten im Streckenverlauf, wie zum Beispiel eine enge Kurve oder Autobahnausfahrt, eine Reduktion der erlaubten Höchstgeschwindigkeit oder ein Ortsschild, etc. ist ein frühzeitiges Ausrollen für eine Reduzierung des Kraftstoffverbrauchs vorteilhaft.

- Steigungsbeginn

Vor Steigungen wird gezielt die Geschwindigkeit vergrößert und Schwung aufgebaut, damit in der Steigungsstrecke die Geschwindigkeitsabnahme bei nicht ausreichender Antriebsleistung möglichst gering ausfällt.

- Bergauf-Fahrt

Bei Bergauf-Fahrt werden die Schaltzeitpunkte des Getriebes so festgelegt, dass zum Beispiel möglichst wenige Schaltungen am Berg benötigt werden und dass möglichst wenig Kraftstoff verbraucht wird. Die kritischen Situationen sind in diesem Fall die Abschnitte mit minimaler Geschwindigkeit, insbesondere dann, wenn ein Unterschreiten dieser Geschwindigkeit eine Rückschaltung nach sich ziehen würde.

Wird im ersten Verfahrensschritt (a) vorausschauend eine der vorstehenden Situationen festgestellt, wird im zweiten Verfahrensschritt (b) eine Vorausberechnung eines verbrauchsoptimalen Geschwindigkeitsverlauf mit einer zugeordneten Geschwindigkeitsvariation und einer zugeordneten Schwung-Nutzungsphasen-Wegstrecke vorgenom-mmen, so als ob das Fahrzeug ungestört durch vorausfahrende Fahrzeuge fahren könnte und eine Einsparsituation vollständig und ungestört ausnutzen könnte. Solche Vorausberechnungen sind bekannt, zum Beispiel aus DE 10 2008 023 135 A1.

Im dritten Verfahrensschritt (c) wird dann in der Vorausberechnung die Störung einer Schwungnutzungsphase durch ein vorausfahrendes Fahrzeug berücksichtigt, indem ein Zusatz-Abstandsbedarf zum Vorausfahrzeug ermittelt wird auf der Grundlage der Geschwindigkeitsvariation und der Schwungphasen-Wegstrecke, die benötigt werden, um die im Verfahrensschritt (b) vorausberechnete kraftstoffsparende Schwung-Nutzungsphase vollständig, jedoch ohne ein zu dichtes Auffahren auf das Vorausfahrzeug durchführen zu können. Mit dem Verfahrensschritt (c) wird somit der Wert eines benötigten Zusatz-Abstands festgestellt, der zusammen mit dem aktuellen Abstand beim Erreichen der Einsparsituation eine vollständige Schwungnutzung zulässt.

Im Verfahrensschritt (d) wird dann im Fahrbetrieb der festgestellte Zusatzabstand vor der Kraftstoff-Einsparsituation weitgehend gleichmäßig über eine Abstandsaufbau-Wegstrecke aufgebaut, wobei diese Abstandsaufbau-Wegstrecke länger ist als die vorausberechnete Schwung-Nutzungsphasen-Wegstrecke und/oder der Zusatz-Abstand wird mit einer fahrerakzeptablen, kolonnenstabilisierenden, kleinen Geschwindigkeitsreduzierung bezüglich der aktuellen Fahrzeuggeschwindigkeit aufgebaut. Nachdem über einen entsprechenden Algorithmus in der Abstandsregelung dieser Zusatz-Abstand aufgebaut wurde, wird dann beim Erreichen der Kraftstoff-Einsparsituation im Verfahrensschritt (e) die Schwungnutzungsphase, wie für eine ungestörte Fahrt vorausberechnet, durchgeführt.

Durch die vorstehende Art des Aufbaus des benötigten Zusatz-Abstands wird erreicht, dass sowohl für den Fahrer als auch für den nachfolgenden Verkehr keine störende unpassende Geschwindigkeitsabnahme des Fahrzeugs in Erscheinung tritt. Sofern der Zusatzabstand in einem vertretbaren Rahmen bleibt, wird der nachfolgende Verkehr nicht beeinträchtigt. Das beanspruchte Verfahren ermöglicht somit eine vorausschauende Abstandswahl, um einerseits die kraftstoffeffiziente Geschwindigkeitsvariation auch bei Kolonnen- bzw. Folgefahrt für diverse Situationen durchführen zu können, und um andererseits den Abstand zum Vorausfahrzeug nur in der erforderlichen Situation und nur auf das notwendige Maß zu vergrößern, um für den Fahrer ein akzeptables Verhalten für Abstand und Geschwindigkeit sicherstellen zu können. Gerade im Hinblick auf eine Kolonnenstabilisierung ist es wichtig, dass der Fahrer eines nachfolgenden Fahrzeugs das Verhalten des automatisierten Systems eines vorausfahrenden Fahrzeugs akzeptiert und nicht übersteuernd eingreift, zum Beispiel indem er zum Überholen ansetzt, nur weil er nicht erkennt, dass das vorausfahrende Fahrzeug lediglich zur Schwungausnutzung temporär langsamer fährt, anschließend aber in der Kolonne wieder aufholen wird.

Wird beispielsweise die Geschwindigkeit auf einer Strecke von 1 km von 85 km/h um 1 km/h auf 84 km/h reduziert, so ergibt sich ein Abstandsgewinn bzw. Zusatzabstand von 12 m zum vorausfahrenden Fahrzeug. Idealerweise bemerkt der Fahrer den Aufbau des zusätzlichen Abstands nicht oder empfindet ihn zumindest nicht als störend. Für eine Kraftstoffeinsparsituation mit einer Länge von 200 m steht dann ein Abstand zur Verfügung, um die Geschwindigkeit um 5 km/h zu erhöhen oder um bei überraschendem Abbremsen des vorausfahrenden Fahrzeugs um 5 km/h die kraftstoffsparende Situation ohne Bremsung durchfahren zu können. Akzeptiert der Fahrer dieses Verhalten ohne einzugreifen, entstehen die Geschwindigkeitsüberhöhungen und Geschwindigkeitsreduzierungen, die bezüglich der Kraftstoffeinsparung Vorteile bieten, nur an den notwendigen festgestellten Streckensituationen. Andere Geschwindigkeitsänderungen werden durch den vorausschauenden Abstandsaufbau kleiner ausfallen.

Für die Vorausberechnung eines ungestörten, verbrauchsoptimierten Geschwindigkeitsverlaufs in der Schwungnutzungsphase gemäß dem Verfahrensschritt (b) wird zweckmäßig die aktuelle Geschwindigkeit des Fahrzeugs als durch das Vorausfahrzeug aufgeprägte Soll-Geschwindigkeit angenommen.

Um einen akzeptablen verkehrsberuhigenden und kolonnenstabilisierenden Aufbau eines Zusatzabstands zu gewährleisten wird eine Abstandsaufbau-Wegstrecke vorgeschlagen, die um einen Faktor 2 bis 5 größer als die vorausberechnete Schwung-Nutzungsphasen-Wegstrecke ist.

Ein entsprechender fahrerakzeptabler und kolonnenstabilisierender Aufbau eines Zusatzabstands wird entsprechend auch erreicht, wenn eine Geschwindigkeitsreduzierung bezüglich der aktuellen Fahrzeuggeschwindigkeit zum Aufbau des Zusatzabstands mit 0,5 km/h bis 4 km/h, vorzugsweise mit 1 km/h erfolgt.

Um unvorhersehbare Verkehrseinflüsse, zum Beispiel eine unvorhergesehene Bremsung des Vorausfahrzeugs, vorbeugend abzufangen und dennoch die volle Einsparsituation ausnützen zu können, kann mit einer weiteren Maßnahme der errechnete Zusatz-Abstandsbedarf um einen Situations-Zusatzabstand vergrößert werden, so dass dann ein entsprechend vergrößerter Zusatzabstand aufgebaut wird. Ein solcher Situations-Zusatzabstand wird vorzugsweise aus einer vordefinierten Tabelle mit situationstypischen Situations-Zusatzabstandswerten entnommen.

Mit einer ähnlichen Maßnahme wird für Stellen im Streckenverlauf, die ein Kraftstoffeinsparpotenzial durch Schwung-Nutzung bieten vorausschauend selbst dann ein Abstand zum vorausfahrenden Fahrzeug aufgebaut, wenn die eigene Schwung-Nutzungsphase, zum Beispiel vor einem Gefälle-Beginn, zur Vergrößerung des Abstands beitragen wird (der Abstand also an sich unkritisch ist), damit auch ein unvorhersehbares Fahrverhalten des vorausfahrenden Fahrzeugs (zum Beispiel durch eine spontane Bremsung) die eigene kraftstoffsparende Schwung-Nutzungsphase nicht beeinträchtigt.

Zweckmäßig und einfach kann der Zusatz-Abstandsbedarf aus einer Geschwindigkeits- und Abstandsvorausberechnung für das eigene und das vorausfahrende Fahrzeug unter der Annahme ermittelt werden, dass das vorausfahrende Fahrzeug mit konstanter Geschwindigkeit fährt.

Eine konstante Geschwindigkeit und entsprechende Fahrstrategie des Vorausfahrzeugs kann auf der Basis der Messung des Abstands- und der Relativgeschwindigkeit bestimmt und berücksichtigt werden.

Alternativ kann der Zusatzabstandsbedarf aus einer Geschwindigkeits- und Abstandsvorausberechnung für das eigene und vorausfahrende Fahrzeug unter der Annahme ermittelt werden, dass das vorausfahrende Fahrzeug eine gleichartige kraftstoffsparende Schwungnutzungsfunktion wie das eigene Fahrzeug implementiert und aktiviert hat. Auch eine solche Fahrstrategie des Vorausfahrzeugs kann durch entsprechende Messungen erkannt und in Folgesituationen bei den Vorausberechnungen berücksichtigt werden.

In diesem Zusammenhang wird darauf hingewiesen, dass sich bei einer Einsparsituation an einem Gefällebeginn der Abstand des Fahrzeugs zu einem Vorausfahrzeug mit einer Schwungnutzungsfunktion vergrößern würde, da das eigene Fahrzeug vor Gefällebeginn automatisch die Geschwindigkeit reduziert, um Kraftstoff zu sparen. Dies ist jedoch nur der Fall, wenn das Vorausfahrzeug mit konstanter Geschwindigkeit weiterfährt. Nutzt allerdings auch das Vorausfahrzeug eine gleichartige kraftstoffsparende Schwungnutzungsfunktion wie das eigene Fahrzeug so wird sich trotzdem vorübergehend ein geringerer Relativabstand einstellen, weil das Vorausfahrzeug die Einsparsituation früher erreicht und damit früher die Geschwindigkeit reduziert. In diesem Fall ist somit auch ein Zusatzabstand erforderlich, damit das eigene Fahrzeug die Schwungnutzungsfunktion in der Einsparsituation vollständig nutzen kann, wie das nachfolgende Beispiel für einen Gefällebeginn verdeutlicht:

Gefällebeginn:

| | |
|---|---|
| Streckenverlauf: | Ebene (0% Steigung), dann Gefälle (-2,5% Steigung) |
| | Vorausfahrendes Fahrzeug nutzt die Situation und rollt von 24 m/s bis auf 22,5 m/s und wieder bis 24 m/s. |
| Schwung-Nutzung: | Eigenes Fahrzeug rollt identisch wie das vorausfahrende Fahrzeug, also von 24 m/s bis auf 22,5 m/s und wieder bis auf 24 m/s. |
| Abstand: | 50 m (zum Zeitpunkt des Beginns der Situation) |
| Ausdehnung der Situation: | 600 m |
| Abstandsbedarf: | 1,5 m/s * 50 m / 24 m/s = 3,13 m |

Hier ergibt sich näherungsweise ein zusätzlicher Abstandsbedarf von lediglich ca. 3 m.

Würde das vorausfahrende Fahrzeug konstant mit 24 m/s fahren und das eigene Fahrzeug den Schwung nutzen, würde ein vergrößerter Abstand entstehend von:

$$\frac{1}{2} * 1,5 \text{ m/s} * 600 \text{ m} / 24 \text{ m/s} = 19 \text{ m}$$

Der ermittelte zusätzliche Abstandsbedarf beträgt bei gleicher Schwungnutzung beider Fahrzeuge also ca. 3 Meter. Um nichtvorhersehbare Verkehrseinflüsse vorbeugend abzufangen, wird in dieser Situation zum Beispiel ein weiterer zusätzlicher Abstand von 4 Metern vorgesehen. Dieser zusätzliche Abstand kann im einfachsten Fall über eine Tabelle mit typischen Abstandswerten für die jeweilige Situation bereitgehalten werden.

Der Abstandaufbau kann gegebenenfalls an Stellen im Streckenverlauf, die für eine kraftstoffsparende Fahrweise kritisch sein können, ausgesetzt oder reduziert werden. Beispielsweise könnte somit auch eine vorteilhafte Aufteilung des Abstandsaufbaus durch Optimierungsrechnung unter Verwendung eines definiert vorgegebenen Fahrzeugmodells ermittelt werden.

Beim Umfang des Abstandsaufbau können in den Vorausberechnungen bekannte Fahrzeugeigenschaften, wie beispielsweise Fahrwiderstand und Antriebsleistung berücksichtigt werden.

In einer weiterführenden Ausgestaltung des Verfahrens sendet ein Vorausfahrzeug seine Fahrstrategie den Fahrzeugen in Funkreichweite mittels Datenfunk sowie gegebenenfalls weitere Daten, die zur Entscheidung der Relevanz der Daten für die umgebenden Fahrzeuge dienen. Eine so dem vorausfahrenden Fahrzeug zugeordnete und relevante Fahrzeugstrategie kann dann in der eigenen Fahrstrategie berücksichtigt werden. Für eine Relevanzentscheidung muss mindestens die Geoposition (GPS, Galileo) vom Vorausfahrzeug mitgesendet werden, gegebenenfalls auch Geschwindigkeit und Fahrtrichtung, wobei diese auch aus mehreren GPS-Übertragungen mit Zeitstempel abgeleitet werden können. Entsprechend kann auch das eigene Fahrzeug den Fahrzeugen in Funkreichweite seine eigene Fahrstrategie sowie weitere Daten senden, um ein kooperatives Fahren zu unterstützen.

Anhand einer Zeichnung wird die Erfindung weiter erläutert.

Es zeigen:

Fig. 1    schematisch den Verlauf der Höhe, der Geschwindigkeit und des Abstands über die Zeit einer Schwungnutzungsphase, und

Fig. 2    ein Blockschaltbild einer Regelungseinrichtung zur Umsetzung des erfindungsgemäßen Verfahrens.

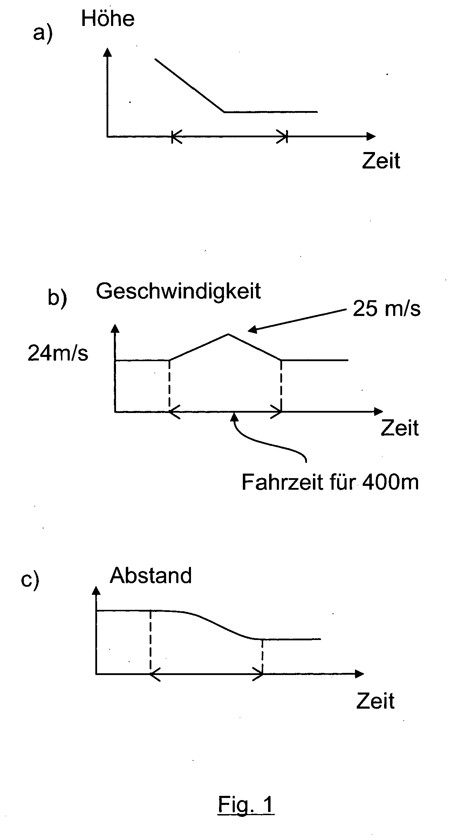

In Fig. 1 ist beispielhaft eine Einsparsituation und Schwungnutzungsphase an einem Gefälleende mit den nachfolgenden Gegebenheiten dargestellt:

| | |
|---|---|
| Annahme: | vorausfahrendes Fahrzeug fährt konstant mit 24 m/s |
| Streckenverlauf: | Gefälle (-2,5% Steigung), dann Ebene (0% Steigung) |
| Schwung-Nutzung: | von 24 m/s auf 25 m/s und wieder auf 24 m/s |
| Ausdehnung der Situation: | 400 m |

Hier ergibt sich näherungsweise ein zusätzlicher Abstandsbedarf von:

Abstandsbedarf:

$$\frac{1}{2} * 1\text{m/s} * 400\text{m} / 24\text{m/s} = 8,3 \text{ m}$$

Gemäß der durch Messung erfassten oder angenommenen Fahrstrategie fährt das Vorausfahrzeug konstant mit 24 m/s. Die Topographie des Streckenverlaufs mit seinem Gefälleende wurde zum Beispiel über GPS erfasst oder ist im eigenen Fahrzeug durch ein erweitertes Navigationssystem bekannt, wie schematisch in Fig. 1, dort Abbildung a), dargestellt.

Die Schwung-Nutzung von 24 m/s auf 25 m/s und wieder auf 24 m/s sowie die Ausdehnung der Situation von 400 m wurde für eine durch ein Vorausfahrzeug ungestörte Fahrt mit einem an sich bekannten Algorithmus vorausberechnet und ist schematisch in Fig. 1b dargestellt.

Daraus ergibt sich, wie berechnet ein Zusatzabstandsbedarf von 8,3 m, der vor der Schwung-Nutzungssituation aufgebaut wurde und zum Ende der Einsparsituation wieder auf den Wunsch-Soll-Abstand des Fahrers abgebaut wird, wie in Fig. 1c schematisch dargestellt.

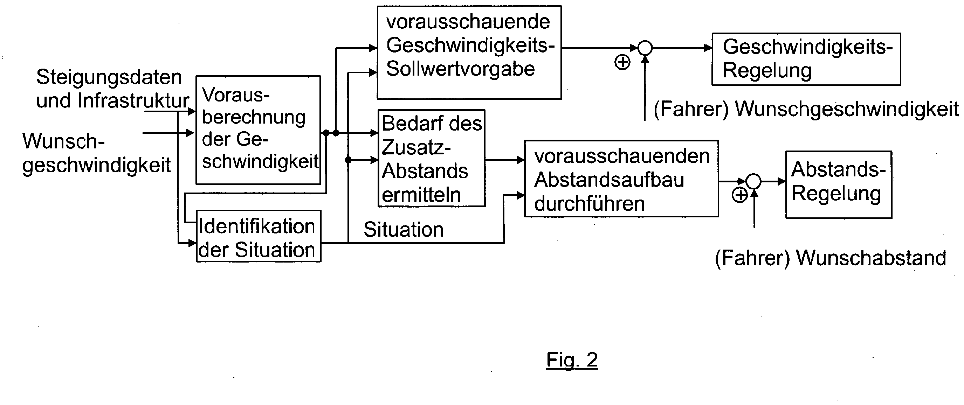

Aus dem Blockschaltbild nach Fig. 2 sind die Elemente und das Zusammenwirken in einer Regeleinrichtung zur Durchführung des erfindungsgemäßen Verfahrens gezeigt. Die Einrichtung enthält die in Nutzfahrzeugen üblichen Elemente zur Geschwindigkeitsregelung und Abstandsregelung. Weiter sind an sich bekannte Elemente aus etablierten Verfahren zur Geschwindigkeitsoptimierung (zum Beispiel entsprechend DE 10 2008 023 135 A1) enthalten, nämlich zur Vorausberechnung der Geschwindigkeit (auf Basis des Fahrerwunsches) und für eine vorausschauende Geschwindigkeits-Sollwertvorgabe.

Erforderliche neue und zusätzliche Elemente zur Realisierung des erfindungsgemäßen Verfahrens sind in den entsprechenden Blöcken angegeben für

- Vorausberechnung der Geschwindigkeit (auf Basis einer Zielgeschwindigkeit)

- Identifikation einer Einsparsituation

- Ermittlung des Zusatzabstandsbedarfs und

- Vorausschauender Abstandsaufbau

**Patentansprüche**

1.  Verfahren zur Regelung des Abstands eines Fahrzeugs zu einem vorausfahrenden Fahrzeug als Vorausfahrzeug, basierend auf vorhandenen Informationen zur eigenen Fahrzeuggeschwindigkeit, zum Abstand und zur Geschwindigkeit des Vorausfahrzeugs und auf Daten von Straßen-Streckeninformationen umfassend folgende Verfahrensschritte:

    a) Feststellung einer Kraftstoff-Einsparsituation für eine mögliche Schwung-Nutzungsphase im vorausliegenden Streckenverlauf,
    b) Vorausberechnung eines verbrauchsoptimalen Geschwindigkeitsverlaufs mit einer zugeordneten Geschwindigkeitsvariation und einer zugeordneten Schwung-Nutzungsphasen-Wegstrecke für eine ungestörte Fahrt, so als ob das Fahrzeug ungestört durch vorausfahrende Fahrzeuge fahren könnte und eine Einsparsituation vollständig und ungestört ausnutzen könnte,
    c) Vorausberechnung eines Zusatz-Abstandsbedarfs zum Vorausfahrzeug auf der Grundlage der Geschwindigkeitsvariation und der Schwungphasen-Wegstrecke, der benötigt wird, um die vorausberechnete kraftstoffsparende Schwung-Nutzungsphase vollständig, jedoch ohne ein definiert zu dichtes Auffahren auf das Vorausfahrzeug, durchführen zu können,
    d) Aufbau des benötigten Zusatz-Abstands vor der Kraftstoff-Einsparsituation, wobei der Zusatz-Abstand über eine Abstandsaufbau-Wegstrecke aufgebaut wird, die länger als die vorausberechnete Schwung-Nutzungsphasen-Wegstrecke ist und/oder mit einer fahrerakzeptablen, kolonnenstabilisierenden, definiert kleinen Geschwindigkeitsreduzierung bezüglich der aktuellen Fahrzeuggeschwindigkeit aufgebaut wird, dass sowohl für den Fahrer als auch für den nachfolgenden Verkehr keine störende unpassende Geschwindigkeitsabnahme des Fahrzeugs in Erscheinung tritt, wobei die fahrerakzeptable, kleine Geschwindigkeitsreduzierung zum Aufbau des Zusatz-Abstands mit 0,5 km/h bis 4 km/h erfolgt,
    e) Durchführung der Schwung-Nutzungsphase beim Erreichen der Kraftstoff-Einsparsituation.

2.  Verfahren nach Anspruch 1, **dadurch gekennzeichnet, dass** für die Vorausberechnung eines ungestörten verbrauchsoptimierten Geschwindigkeitsverlaufs in der Schwung-Nutzungsphase die aktuelle Geschwindigkeit des Fahrzeugs als durch das Vorausfahrzeug aufgeprägte Soll-Geschwindigkeit angenommen wird.

3.  Verfahren nach Anspruch 1 oder Anspruch 2, **dadurch gekennzeichnet, dass** die Abstandsaufbau-Wegstrecke um einen Faktor 2 bis 5 größer als die vorausberechnete Schwung-Nutzungsphasen-Wegstrecke vorgegeben wird.

4.  Verfahren nach einem der Ansprüche 1 bis 3, **dadurch gekennzeichnet, dass** die fahrerakzeptable, kleine Geschwindigkeitsreduzierung mit 1 km/h erfolgt.

5.  Verfahren nach einem der Ansprüche 1 bis 4, **dadurch gekennzeichnet, dass** der auf der Grundlage der Geschwindigkeitsvariation und der Schwungphasen-Wegstrecke errechnete Zusatz-Abstandsbedarf um einen Situations-Zusatzabstand vergrößert wird, um unvorhersehbare Verkehrseinflüsse vorbeugend abzufangen, wobei bevorzugt vorgesehen ist, dass ein solcher Situations-Zusatzabstand aus einer vordefinierten Tabelle mit situationstypischen Situations-Zusatzabstandswerten entnommen wird.

6.  Verfahren nach einem der Ansprüche 1 bis 5, **dadurch gekennzeichnet, dass** für die Stellen im Streckenverlauf, die ein Kraftstoffeinsparpotenzial durch Schwung-Nutzung bieten, vorausschauend selbst dann ein Abstand zum vorausfahrenden Fahrzeug aufgebaut wird, wenn die eigene Schwung-Nutzungsphase zur Vergrößerung des Abstandes beitragen wird, damit auch ein unvorhersehbares Fahrverhalten des vorausfahrenden Fahrzeugs die eigene kraftstoffsparende Schwung-Nutzungsphase nicht beeinträchtigt.

7. Verfahren nach einem der Ansprüche 1 bis 6, **dadurch gekennzeichnet, dass** der zusätzliche Abstandsbedarf ermittelt wird aus einer Geschwindigkeits- und Abstandsvorausberechnung für das eigene und das vorausfahrende Fahrzeug unter der Annahme, dass das vorausfahrende Fahrzeug mit konstanter Geschwindigkeit fährt.

8. Verfahren nach einem der Ansprüche 1 bis 6, **dadurch gekennzeichnet, dass** der zusätzliche Abstandsbedarf ermittelt wird aus einer Geschwindigkeits- und Abstandsvorausberechnung für das eigene und das vorausfahrende Fahrzeug unter der Annahme, dass das vorausfahrende Fahrzeug eine gleichartige kraftstoffsparende Schwung-Nutzungsfunktion wie das eigene Fahrzeug implementiert und aktiviert hat.

9. Verfahren nach einem der Ansprüche 1 bis 8, **dadurch gekennzeichnet, dass** der Abstandsaufbau unterbrochen oder reduziert wird an den Stellen im Streckenverlauf, die für das eigene Fahrzeug kritisch sind im Bezug auf eine kraftstoffsparende Fahrweise, insbesondere bei Abschnitten mit definiert niedriger Motordrehzahl und/oder mit definiert niedriger und abfallender Motordrehzahl und/oder vor einer Getrieberückschaltung.

10. Verfahren nach einem der Ansprüche 1 bis 9, **dadurch gekennzeichnet, dass** der Ort, die Ausdehnung und die Größe der Schwung-Nutzungsphase vorausschauend ermittelt wird und daraus der Umfang des Abstandsaufbaus bestimmt wird, insbesondere dergestalt, dass eine Geschwindigkeitsvorausberechnung auf der Basis von bekannten Fahrzeugeigenschaften für das eigene Fahrzeug, vorzugsweise Daten zum Fahrwiderstand und/oder der Antriebsleistung, durchgeführt wird.

11. Verfahren nach einem der Ansprüche 1 bis 10, **dadurch gekennzeichnet, dass** die Fahrstrategie des vorausfahrenden Fahrzeugs auf Basis der Messung des Abstands- und der Relativgeschwindigkeit zum Vorausfahrenden bestimmt wird und in Folgesituationen entsprechend berücksichtigt wird.

12. Verfahren nach einem der Ansprüche 1 bis 11, **dadurch gekennzeichnet, dass** das vorausfahrende Fahrzeug seine Fahrstrategie den Fahrzeugen in Funkreichweite mittels Datenfunk sendet sowie weitere Daten sendet, die zur Entscheidung der Relevanz der Daten für die umgebenden Fahrzeuge dienen, und dass eine so dem vorausfahrenden Fahrzeug zugeordnete und damit relevante Fahrstrategie in der eigenen Fahrstrategie berücksichtigt wird.

13. Verfahren nach einem der Ansprüche 1 bis 12, **dadurch gekennzeichnet, dass** das eigene Fahrzeug den Fahrzeugen in Funkreichweite seine eigene Fahrstrategie sowie weitere Daten sendet, um ein kooperatives Fahren zu unterstützen.

14. Kraftfahrzeug, umfassend Mittel zur Durchführung eines Verfahrens nach einem der vorhergehenden Ansprüche.

## Claims

1. Method for regulating the separation of a vehicle from a preceding vehicle as the vehicle ahead, based on available information pertaining the own vehicle speed, to the separation and to the speed of the vehicle ahead, and to data of highway route information, said method comprising the following steps:

   a) determining a fuel-saving situation for a possible momentum utilization phase in the route ahead;
   b) precomputing a consumption-optimal speed profile with an associated speed variation and an associated momentum utilization phase distance for undisturbed travel as if the vehicle could travel undisturbed through preceding vehicles and could exploit a fuel-saving situation completely and undisturbed;
   c) precomputing an additional separation requirement to the vehicle ahead based on the speed variation and the momentum phase distance that is required to be able to fully implement the precomputed fuel saving momentum utilization phase, but without a defined, excessively close approach to the vehicle ahead;
   d) building up the required additional separation prior to the fuel-saving situation , wherein the additional separation is built up over a separation build-up distance that is longer than the precomputed momentum utilization phase distance and/or with a driver-acceptable, convoy-stabilizing, defined small speed reduction relative to the current vehicle speed, such that an inappropriate distracting decrease in speed of the vehicle does not arise either for the driver or for the following traffic, wherein the driver-acceptable, small speed reduction for building up the additional separation is performed with 0.5 km/h to 4 km/h;

e) carrying out the momentum utilization phase on reaching the fuel-saving situation.

2. Method according to Claim 1, **characterized in that** for precomputing an undisturbed consumption-optimized speed profile in the momentum utilization phase the current speed of the vehicle is adopted as the target speed imposed by the vehicle ahead.

3. Method according to Claim 1 or Claim 2, **characterized in that** the separation build-up distance is specified as greater by a factor of 2 to 5 than the precomputed momentum utilization phase distance.

4. Method according to one of Claims 1 to 3 **characterized in that** the driver-acceptable, small speed reduction is performed with 1 km/h.

5. Method according to one of Claims 1 to 4, **characterized in that** the additional separation requirement computed on the basis of the speed variation and the momentum phase distance is increased by a situation-dependent additional separation in order to be able to preventively intercept unpredictable traffic influences, wherein it is preferably provided that such a situation-dependent additional separation is retrieved from a predefined table having situation-typical situation-dependent additional separation values.

6. Method according to one of Claims 1 to 5, **characterized in that** for the points in the route that offer fuel-saving potential by momentum utilization, a separation from the preceding vehicle is built up predictively, even if the own momentum utilization will contribute towards increasing the separation, so that even unpredictable driving behaviour of the preceding vehicle does not adversely affect the own fuel-saving momentum utilization phase.

7. Method according to one of Claims 1 to 6, **characterized in that** the additional separation requirement is determined from a speed and separation precomputation for the own and the preceding vehicle while assuming that the vehicle ahead is travelling at a constant speed.

8. Method according to one of Claims 1 to 6, **characterized in that** the additional separation requirement is determined from a speed and a separation precomputation for the own and the preceding vehicle while assuming that the preceding vehicle has implemented and activated a fuel-saving momentum utilization of the same type as that of the own vehicle.

9. Method according to one of Claims 1 to 8, **characterized in that** the separation build-up is interrupted or reduced at the points on the route that are critical for the own vehicle in terms of a fuel-saving driving style, in particular in sections with a defined lower engine speed and/or with a defined lower and decreasing engine speed and/or prior to a gearbox downshift.

10. Method according to one of Claims 1 to 9, **characterized in that** the location, the extent and the size of the momentum utilization phase are determined predictively and the scope of the separation build-up is determined therefrom, in particular in such a manner that a speed precomputation is carried out on the basis of known vehicle properties for the own vehicle, preferably data pertaining to the rolling resistance and/or the drive power.

11. Method according to one of Claims 1 to 10, **characterized in that** the driving strategy of the preceding vehicle is determined based on the measurement of the separation and the relative speed in relation to the vehicle ahead and is correspondingly taken into account in subsequent situations.

12. Method according to one of Claims 1 to 11, **characterized in that** the preceding vehicle sends the driving strategy thereof to the vehicle within radio range by means of wireless data transmission and sends other data which serves for deciding the relevance of the data for the surrounding vehicles, and that a driving strategy thus associated with and relevant to the preceding vehicle is taken into account in the own driving strategy.

13. Method according to one of Claims 1 to 12, **characterized in that** the own vehicle sends its own driving strategy as well as further data to the vehicles within radio range so as to facilitate cooperative driving.

14. Motor vehicle comprising means for carrying out a method according to one of the preceding claims.

**Revendications**

1. Procédé de régulation de la distance entre un véhicule et un véhicule qui précède comme véhicule devant, sur la base d'informations existantes concernant la vitesse propre du véhicule, la distance et la vitesse du véhicule devant et des données d'informations de trajet routier, comprenant les étapes de procédé suivantes consistant à :

   a) constater une situation d'économie de carburant pour une phase d'utilisation de l'énergie cinétique possible sur le tracé de trajet à venir,
   b) calculer préalablement un tracé de vitesse optimal en consommation avec une variation de vitesse associée et un parcours de phase d'utilisation de l'énergie cinétique associé pour une conduite sans gêne comme si le véhicule pouvait rouler sans être gêné par des véhicules qui le précèdent et était en mesure d'exploiter pleinement et sans gêne une situation d'économie,
   c) calculer préalablement un besoin de distance supplémentaire par rapport au véhicule devant sur la base de la variation de vitesse et du parcours de phase d'énergie cinétique qui est nécessaire afin de pouvoir exécuter pleinement la phase d'utilisation de l'énergie cinétique économisant du carburant et calculée préalablement mais sans se rapprocher trop près du véhicule devant de manière définie,
   d) établir la distance supplémentaire nécessaire avant la situation d'économie de carburant, dans lequel la distance supplémentaire est établie sur un parcours d'établissement de distance qui est plus long que le parcours de phase d'utilisation de l'énergie cinétique calculée préalablement, et/ou est établie avec une petite réduction de vitesse définie, acceptable pour le conducteur et stabilisant le convoi, par rapport à la vitesse de véhicule actuelle de sorte que ni pour conducteur ni pour le trafic suivant, aucune diminution de vitesse inadéquate gênante du véhicule n'apparaisse, la petite réduction de vitesse acceptable pour le conducteur servant à établir la distance supplémentaire étant effectuée entre 0,5 km/h et 4 km/h,
   e) exécuter la phase d'utilisation de l'énergie cinétique lorsque la situation d'économie de carburant est atteinte.

2. Procédé selon la revendication 1, **caractérisé en ce que** pour le calcul préalable d'un tracé de vitesse sans gêne, optimisé en consommation, dans la phase d'utilisation de l'énergie cinétique, la vitesse actuelle du véhicule est supposée comme la vitesse théorique imposée par le véhicule devant.

3. Procédé selon la revendication 1 ou 2, **caractérisé en ce que** le parcours d'établissement de distance est spécifié comme étant supérieur d'un facteur de 2 à 5 au parcours de phase d'utilisation de l'énergie cinétique calculé préalablement.

4. Procédé selon l'une quelconque des revendications 1 à 3, **caractérisé en ce que** la petite réduction de vitesse, acceptable pour le conducteur, est effectuée à 1 km/h.

5. Procédé selon l'une quelconque des revendications 1 à 4, **caractérisé en ce que** le besoin de distance supplémentaire calculé sur la base de la variation de vitesse et du parcours de phase d'énergie cinétique est augmenté d'une distance supplémentaire de situation afin d'amortir de manière préventive des influences du trafic imprévisibles, dans lequel il est prévu de préférence qu'une telle distance supplémentaire de situation soit extraite d'un tableau prédéfini contenant des valeurs de distance supplémentaire de situation typiques pour certaines situations.

6. Procédé selon l'une quelconque des revendications 1 à 5, **caractérisé en ce que** pour les endroits sur le tracé de trajet qui offrent un potentiel d'économie de carburant par utilisation de l'énergie cinétique, une distance par rapport au véhicule devant est établie automatiquement par anticipation même si la phase d'utilisation de l'énergie cinétique propre contribuera à augmenter la distance afin que même un comportement de conduite imprévisible du véhicule devant n'affecte pas la phase d'utilisation de l'énergie cinétique économisant du carburant propre.

7. Procédé selon l'une quelconque des revendications 1 à 6, **caractérisé en ce que** le besoin de distance supplémentaire est établi à partir d'un calcul préalable de la vitesse et de la distance pour le véhicule propre et le véhicule devant en supposant que le véhicule devant roule à vitesse constante.

8. Procédé selon l'une quelconque des revendications 1 à 6, **caractérisé en ce que** le besoin de distance supplémentaire est établi à partir d'un calcul préalable de la vitesse et de la distance pour le véhicule propre et le véhicule devant en supposant que le véhicule devant ait mis en oeuvre et activé une fonction similaire d'utilisation de l'énergie cinétique économisant du carburant.

9. Procédé selon l'une quelconque des revendications 1 à 8, **caractérisé en ce que** l'établissement de distance est interrompu ou réduit aux endroits sur le tracé de trajet qui sont critiques pour le véhicule propre concernant un mode de conduite économisant du carburant, en particulier sur des tronçons à régime moteur plus faible défini et/ou à régime moteur plus faible défini et diminuant et/ou avant une rétrogradation.

10. Procédé selon l'une quelconque des revendications 1 à 9, **caractérisé en ce que** le lieu, l'étendue et la grandeur de la phase d'utilisation de l'énergie cinétique sont déterminés par anticipation et permettant de déterminer le degré de l'établissement de distance, en particulier de telle sorte qu'un calcul préalable de la vitesse est effectué sur la base de propriétés de véhicule connues pour le véhicule propre, de préférence de données concernant la résistance à l'avancement et/ou la puissance d'entraînement.

11. Procédé selon l'une quelconque des revendications 1 à 10, **caractérisé en ce que** la stratégie de conduite du véhicule devant est déterminée sur la base de la mesure de la distance et de la vitesse relative par rapport au véhicule qui précède et est prise en compte de façon adéquate dans les situations suivantes.

12. Procédé selon l'une quelconque des revendications 1 à 11, **caractérisé en ce que** le véhicule qui précède envoie sa stratégie de conduite aux véhicules à portée radio par radiodiffusion de données ainsi que d'autres données qui servent à la décision de la pertinence des données pour les véhicules environnants, et **en ce qu'**une stratégie de conduite associée ainsi au véhicule devant et donc pertinente est prise en compte dans la stratégie de conduite propre.

13. Procédé selon l'une quelconque des revendications 1 à 12, **caractérisé en ce que** le véhicule propre envoie aux véhicules à portée radio sa propre stratégie de conduite ainsi que d'autres données pour assister une conduite coopérative.

14. Véhicule automobile, comprenant des moyens pour exécuter un procédé selon l'une quelconque des revendications précédentes.

a) Höhe

Zeit

b) Geschwindigkeit

25 m/s

24m/s

Zeit

Fahrzeit für 400m

c) Abstand

Zeit

Fig. 1

Steigungsdaten und Infrastruktur

Wunsch-geschwindigkeit

Voraus-berechnung der Ge-schwindigkeit

Identifikation der Situation

vorausschauende Geschwindigkeits-Sollwertvorgabe

Bedarf des Zusatz-Abstands ermitteln

Situation

vorausschauenden Abstandsaufbau durchführen

⊕

Geschwindigkeits-Regelung

(Fahrer) Wunschgeschwindigkeit

⊕

Abstands-Regelung

(Fahrer) Wunschabstand

Fig. 2

EP 2 826 686 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102008023135 A1
- DE 102008035944 B4
- DE 102006003625 A1
- DE 102011121853
- DE 102008019174